# EUROPÄISCHE PATENTANMELDUNG

(11) **EP 0 971 470 A2**
(43) Veröffentlichungstag der Anmeldung: **12.01.2000**
(21) Anmeldenummer: 99250209.6
(22) Anmeldetag: 25.06.1999
(51) Int. Cl.: H02H 3/00

(54) **Leistungsschalter mit einer Einrichtung zur Verarbeitung eines Stromsignales**

(30) Priorität: 09.07.1998 DE 19832591
(71) Anmelder: SIEMENS AKTIENGESELLSCHAFT, 80333 München (DE)
(72) Erfinder: Rehaag, Hans, 16341 Zepernick (DE); Pancke, Andreas, 13507 Berlin (DE)

(57) **Zusammenfassung**

Ein Leistungsschalter weist eine Einrichtung (6) zur Verarbeitung eines Stromsignals und zur Ausgabe eines Schaltbefehls zur Auslösung des Leistungsschalters bei der Überschreitung eines Grenzwertes des genannten Stromsignales auf. Dabei wirkt die Einrichtung (6) mit einem einer Hauptstrombahn (1) des Leistungsschalters zugeordneten Stromsensor (5) zur Gewinnung des Stromsignals zusammen, das einem in der Hauptstrombahn fließenden Strom entspricht. Zur Speicherung des Wertes eines bei der Auslösung des Leistungsschalters fließenden Stromes ist ein elektronisches Potentiometer (11) vorgesehen, das eine Schnittstelleneinrichtung zur Eingabe und Ausgabe von Einstellwerten entsprechend einem im Leistungsschalter fließenden Strom sowie eine Speichereinrichtung (14) für Werte des Stromes enthält. Damit steht nach einer Auslösung des Leistungsschalters der Wert des im Zeitpunkt der Auslösung fließenden Stromes zur Auswertung und Anzeige zur Verfügung.

## Beschreibung

Die Erfindung betrifft einen Leistungsschalter mit einer Einrichtung zur Verarbeitung eines Stromsignais und zur Ausgabe eines Schaltbefehls zur Auslösung des Leistungsschalters bei der Überschreitung eines Grenzwertes des genannten Stromsignales, sowie mit einem Stromsensor zur Gewinnung des Stromsignales, das einem in einer Hauptstrombahn des Leistungsschalters fließenden Strom entspricht.

Ein Leistungsschalter dieser Art ist z.B. durch die EP 0 279 689 A2 oder die DE 44 45 060 C1 bekanntgeworden. Die Einrichtung zur Verarbeitung eines Stromsignals gehört dabei zu einem elektronischen Überstromauslöser, der einen digitalen elektronischen Schaltungszweig sowie einen analogen elektronischen Schaltungszweig umfaßt. Dabei hat der analoge Schaltungszweig die Aufgabe, eine möglichst unverzögerte Auslösung des Leistungsschalters zu bewirken, wenn in dem Leistungsschalter ein hoher oder sehr hoher Strom fließt und der digitale Schaltungszweig nicht betriebsbereit oder gestört ist.

Für die zusätzliche Verwendung einer gesonderten analogen Umgehungsschaltung bei einem digitalen elektronischen Überstromauslöser gibt es unterschiedliche Gründe. Einer dieser Gründe kann darin bestehen, daß eine in der digitalen elektronischen Schaltung enthaltener Mikroprozessor nicht in der Lage ist, aus dem inaktiven Zustand heraus innerhalb einer geforderten sehr kurzen Zeitspanne ein Stromsignal auszuwerten und einen Auslösebefehl abzugeben. Zum Verständnis dieser Forderung sei erwähnt, daß die zum Betrieb eines Überstromauslösers erforderliche Hilfsenergie in der Regel aus dem durch den Leistungsschalter fließenden Strom gewonnen wird, und zwar mittels des erwahnten Stromsensors oder eines gesonderten Hilfsenergiewandlers. Dies bedeutet, daß sich der elektronische Überstromauslöser in einem inaktiven Ruhezustand befindet, wenn der Leistungsschalter ausgeschaltet oder die Schaltanlage vom Netz getrennt ist. Wird der Leistungsschalter nun auf einen unerkannt bestehenden Kurzschluß eingeschaltet, so verstreicht eine unerwünscht lange Zeit, bis die Mikroprozessoreinrichtung des Überstromauslösers betriebsbereit ist und ein ihr zugeführtes Stromsignal auswerten kann. Demgegenüber sind analoge elektronische Schaltungen in der Lage, sofort zu reagieren. Die geringere Genauigkeit der Signalverarbeitung wirkt sich nicht störend aus, weil es beim Schutz gegen Kurzschlußströme nur auf das Erkennen einer Überschreitung eines vorgegebenen Grenzwertes des fließenden Stromes und auf die anschließende unverzögerte Abgabe eines Auslösebefehls ankommt.

Weitere Gründe für die Benutzung einer analogen Umgehungsschaltung können ein Schutz des Leistungsschalters und/oder eines Verbrauchers bei einem Ausfall oder einer mangelhaften Funktion der digitalen elektronischen Schutzschaltung sein. Insbesondere kann eine Umgehungsschaltung so ausgebildet sein, daß sie auf eine aus beliebigem Grund aufgetretene unzulässig erhöhte Temperatur reagiert, die wichtige Komponenten des Leistungsschalters wie Strombahn oder elektronische Auslöseeinheit schädigen könnte (DE 31 14 547 C2).

Während bei digitalen elektronischen Überstromauslösern zum normalen Leistungsumfang die Speicherung des Höchstwertes eines bei der Auslösung fließenden Stromes gehört, bestand diese Möglichkeit bei einer Auslösung durch eine analoge Umgehungsschaltung bisher nicht. Der Benutzer konnte daher nach einer Auslösung nur feststellen, ob die Auslösung durch den digitalen oder durch den analogen Schaltungsteil erfolgte, blieb aber im unklaren darüber, wie groß der Strom bei analoger Auslosung tatsächlich war. Hiervon ausgehend liegt der Erfindung die Aufgabe zugrunde, die Höhe eines beim Ansprechen eines Überstromauslösers fließenden Stromes zwecks späterer Anzeige und -bei Bedarf- zwecks weiterer Verarbeitung zu erfassen und zu speichern.

Gemäß der Erfindung wird diese Aufgabe dadurch gelöst, daß zur Speicherung des Wertes eines bei der Auslösung des Leistungsschalters fießenden Stromes ein elektronisches Potentiometer vorgesehen ist, das eine Schnittstelleneinrichtung zur Eingabe und Ausgabe von Einstellwerten entsprechend einem im Leistungsschalter fließenden Strom sowie eine Speichereinrichtung für Werte des Stromes enthält.

Die Anwendung der Erfindung ist nicht auf Leistungsschalter eines bestimmten Typs beschränkt. Somit ist die eingangs erläuterte Kombination eines Leistungsschalters mit einem digital arbeitenden elektronischen Überstromauslöser und einer analogen Umgehungsschaltung nur eine der möglichen Konfigurationen. Weitere Konfigurationen können z.B. Leistungsschalter mit konventionellen elektromechanischen Auslöseeinheiten oder mit ausschließlich analogen elektronischen Auslöseeinheiten sein. In diesen Fällen werden die Leistungsschalter durch eine Schaltungsanordnung nach der Erfindung erweitert bzw. durch eine neue Funktion ergänzt. Hierfür ist es nicht Bedingung, daß ein Stromsensor im Leistungsschalter vorhanden ist, da ein solcher Stromsensor auch außerhalb des Leistungsschalters angeordnet sein kann.

Im Rahmen der Erfindung kann ferner eine Nachführschaltung zur selbsttätigen Einstellung des elektronischen Potentiometers auf einen Einstellwert entsprechend einem augenblicklich fließenden Strom vorgesehen sein. Damit kann der Wert des bei der Auslösung geflossenen Stromes über die Schnittstelle abgefragt werden.

Eine zweckmäßige Ausgestaltung der Nachführschaltung kann darin bestehen, daß ein Taktgeber zur Erzeugung von Steuerimpulsen zur Inkrementierung des Einstellwertes des elektronischen Potentiometers und ein Komparator mit Eingängen für einen aktuellen Wert des Stromes und den aktuellen Einstellwert des elektronischen Potentiometers vorgesehen ist, wobei ein dem elektronischen Potentiometer zuzuführendes Ausgangssignal des Komparators zur Aktivierung der Inkrementierung dient, wenn der Einstellwert niedriger als der genannte Wert des Stromes ist.

Ferner kann zur Durchführung der stufenweisen Erhöhung der Einstellwertes des elektronischen Potentiometers ein als freilaufender Oszillator ausgebildeter Taktgeber vorgesehen sein. Ein solcher Oszillator erweist sich als ausreichend für den vorliegenden Zweck und ist wesentlich preiswerter realisierbar als beispielsweise ein Quarzoszillator, wie er als Taktgeber für Mikroprozessoreinrichtungen benutzt wird.

Elektronische Potentiometer ("E-Pot") sind an sich bekannt. Beispiele hierfür sind der US 4 668 932 oder der US 4 715 051 zu entnehmen. Ein Speicher sorgt dafür, daß Einstellwerte beim Unterbrechen der Energieversorgung erhalten bleiben. Die Einstellung des elektronischen Potentiometers erfolgt durch eine schrittweise arbeitende Steuerung in der Weise, daß beim Anlegen eines 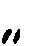 AUF" oder 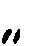 AB"-Signals der nach außen wirkende Widerstandswert des Potentiometers schrittweise erhöht oder erniedrigt wird. Die Verwendung eines solchen elektronischen Potentiometers bei einem Leistungsschalter ist demgegenüber neu und stellt eine wertvolle Verbesserung dar.

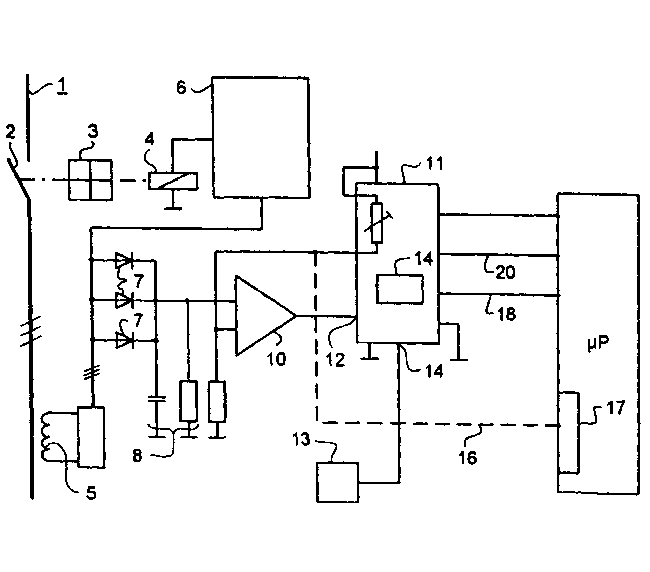

Die Erfindung wird im folgenden anhand des in der Figur dargestellten Ausführungsbeispieles näher erläutert.

Die Figur zeigt in einem Blockschaltbild eine Stromerfassungsschaltung mit Speicherung eines Stromwertes durch ein elektronisches Potentiometer.

In der Figur sind als Bestandteile eines Niederspannungs-Leistungsschalters vereinfacht eine Hauptstrombahn 1 mit einer Schaltkontaktanordnung 2 sowie ein Schaltschloß 3 und ein Auslösemagnet 4 gezeigt. Der Hauptstrombahn 1 ist ein Stromsensor 5 zur Bereitstellung eines Stromsignales zugeordnet. Die Hauptstrombahn und der Stromsensor können ein- oder mehrphasig, insbesondere dreiphasig ausgebildet sein, wie dies in der Figur angedeutet ist. Ob sich der Stromsensor 5 innerhalb oder außerhalb eines Gehäuses des Leistungsschalters befindet, ist für die Wirkungsweise der Schaltungsanordnung unerheblich. Ebenso kommt es auf das System bzw. den Aufbau einer in der Figur gezeigten, als Auslöseeinheit wirkenden Einrichtung 6 nicht an.

Die mittels des Stromsensors 5 gewonnenen Stromsignale dienen insbesondere zur Überwachung der in der Hauptstrombahn 1 des Leistungsschalters fließenden Ströme. Hierzu werden die Stromsignale der erwähnten Einrichtung 6 zugeführt, die bei einer Überschreitung vorgegebener Grenzwerte den Auslösemagnet 4 betätigt, um die Schaltkontaktanordnung 2 zu öffnen. Die Eirichtung 6 kann einen beliebigen geeigneten Aufbau besitzen, beispielsweise als analoge oder digitale elektronische Schaltung oder als elektromechanische Einheit. Auch können in der Einrichtung 6 zugleich analog und digital arbeitende elektronische Schaltungsteile enthalten sein, wobei der analoge Schaltungsteil in der eingangs erläuterten Weise eine schnellwirkende Umgehungsschaltung für den digitalen Schaltungsteil bildet.

Wie naher der Figur zu entnehmen ist, werden die mittels des Stromsensors 5 gewonnenen Stromsignale über Dioden 7 an eine R-C-Kombination 8 angelegt, um ein dem jeweils höchsten fließenden Strom entsprechendes Signal zu gewinnen. Dieses Höchstwertsignal wird in einem Komparator 10 mit einem Einstellwert eines elektronischen Potentiometers 11 verglichen. Mit einem Ausgangssignal des Komparators 8 wird ein Schalteingang 12 des elektronischen Potentiometers 11 beaufschlagt, um eine Veränderung des jeweiligen Einstellwertes zu ermöglichen. Dies erfolgt schrittweise durch Taktimpulse eines Taktgebers 13, die an einen Takteingang 14 des elektronischen Potentiometers 11 angelegt sind. Diese Anordnung wirkt als eine Nachführschaltung, die solange den Einstellwert des elektronischen Potentiometers 11 erhöht, wie der Komparator 10 eine Überschreitung des Einstellwertes durch den Strom-Höchstwert feststellt. Der neue Einstellwert überschreibt dabei den zuletzt in einem internen Speicher 14 des elektronischen Potentiometers 11 stehenden Wert. Eine Mikroprozessoreinrichtung 15, die zu der Einrichtung 6 gehören oder zusätzlich vorgesehen sein kann, vermag den Inhalt des Speichers 8 auszulesen und nach erfolgter Auslösung des Leistungsschalters oder nach Anforderung durch einen Benutzer anzuzeigen. Auch kann mittels der gestrichelten Verbindung 16 der jeweilige Einstellwert einem Analog-Digital-Wandler 17 der Mikroprozessoreinrichtung 15 zugeführt und durch diese verarbeitet und zur Anzeige gebracht werden. Weitere Verbindungen 18 und 20 zwischen dem elektronischen Potentiometer 11 und der Mikroprozessoreinrichtung 15 dienen der Rückstellung des Potentiometers 11 und der Versorgung mit dem Prozessortakt.

Die erläuterte Nachführschaltung arbeitend bei ansteigendem Strom so lange, bis die Einrichtung 6 den Auslösemagnet betätigt und hierdurch die Schaltkontaktanordnung geöffnet wird. Im Speicher 14 des elektronischen Potentiometers 11 befindet sich dann der Wert des zuletzt erfaßten Stromes. Mittels einer geeigneten Einrichtung, insbesondere mittels der gezeigten Mikroprozessoreinrichtung 15 in Verbindung mit einem Anzeigemittel, z.B. einem Flüssigkristalldisplay (LCD), kann nun nach der Auslösung oder auf besondere Anforderung der gespeicherte Wert des Stromes angezeigt werden. Ferner kann der gespeicherte Wert an eine andere Stelle übermittelt und/oder ausgewertet werden.

## Patentansprüche

1. Leistungsschalter mit einer Einrichtung zur Verarbeitung eines Stromsignals und zur Ausgabe eines Schaltbefehls zur Auslösung des Leistungsschalters bei der Überschreitung eines Grenzwertes des genannten Stromsignales, sowie mit einem Stromsensor (5), einer Hauptstrombahn (1) des Leistungsschalters zugeordneten Stromsensor (5) zur Gewinnung des Stromsignals, das einem in einer Hauptstrombahn des Leistungsschalters (1) fließenden Strom entspricht, **dadurch gekennzeichnet,** daß zur Speicherung des Wertes eines bei der Auslösung des Leistungsschalters fließenden Stromes ein elektronisches Potentiometer (11) vorgesehen ist, das eine Schnittstelleneinrichtung zur Eingabe und Ausgabe von Einstellwerten entsprechend einem im Leistungsschalter fließenden Strom sowie eine Speichereinrichtung (14) für Werte des Stromes enthält.

2. Überstromauslöser nach Anspruch 2,
**dadurch gekennzeichnet,** daß eine Nachführschaltung zur selbsttätigen Einstellung des elektronischen Potentiometers (11) auf einen Einstellwert entsprechend einem augenblicklich fließenden Strom vorgesehen ist.

3. Überstromauslöser nach Anspruch 2,
**dadurch gekennzeichnet,** daß die Nachführschaltung einen Taktgeber (13) zur Erzeugung von Steuerimpulsen zur Inkrementierung des Einstellwertes des elektronischen Potentiometers (11) und einen Komparator (10) mit Eingängen für einen aktuellen Wert des Stromes und den aktuellen Einstellwert des elektronischen Potentiometers (11) aufweist, wobei ein dem elektronischen Potentiometer (11) zuzuführendes Ausgangssignal des Komparators (10) zur Aktivierung der Inkrementierung dient, wenn der Einstellwert niedriger als der genannte Wert des Stromes ist.

4. Überstromauslöser nach Anspruch 3,
**dadurch gekennzeichnet,** daß zur Durchführung der stufenweisen Erhöhung des Einstellwertes des elektronischen Potentiometers (11) ein als freilaufender Oszillator ausgebildeter Taktgeber (13) vorgesehen ist.
